# EUROPEAN PATENT SPECIFICATION

(11) **EP 2 778 639 B1**
(45) Date of publication and mention of the grant of the patent: **28.06.2017**
(21) Application number: 12847513.4
(22) Date of filing: 05.11.2012
(51) Int. Cl.: G01K 7/02, G01K 7/04

(54) **PLATINUM-BASED THERMOCOUPLE**
PLATINBASIERTES THERMOELEMENT
THERMOCOUPLE À BASE DE PLATINE

(30) Priority: 11.11.2011 JP 2011247104
(43) Date of publication of application: 17.09.2014
(73) Proprietor: Tanaka Kikinzoku Kogyo K.K., Chiyoda-ku Tokyo 100-6422 (JP)
(72) Inventor: YAMASAKI, Haruki, Isehara-shi Kanagawa 259-1146 (JP); HAMADA, Tokio, Isehara-shi Kanagawa 259-1146 (JP); KODAMA, Takeomi, Isehara-shi Kanagawa 259-1146 (JP)
(74) Representative: Boult Wade Tennant
(86) International application number: PCT/JP2012/078576
(87) International publication number: WO 2013/069588

(56) References cited:
- EP-A1- 1 544 314
- CN-A- 101 561 322
- JP-A- 2002 012 926
- JP-A- 2004 053 502
- JP-A- 2011 158 424

## Description

### BACKGROUND OF THE INVENTION

### FIELD OF THE INVENTION

The present invention relates to a Pt-PtRh based thermocouple composed of Pt vs. Pt-Rh alloy.

### DESCRIPTION OF THE RELATED ART

Thermocouples are most frequently used as temperature sensors in industry. A known typical example of thermocouples as the temperature sensor is a Pt-PtRh based thermocouple such as an S thermocouple (Pt vs. Pt-10%Rh alloy) or an R thermocouple (Pt vs. Pt-13%Rh alloy).

In the Pt-PtRh based thermocouple, high purity platinum (5N or higher) from which as much impurity as possible has been removed is usually used as a Pt wire. On the other hand, a Pt-Rh alloy is used in the opposite positive (+) electrode. Therefore, when disconnection of the thermocouple occurs during use or handling, the disconnection mostly occurs on the Pt wire side having low strength. EP1544314A1 relates to an extended temperature range EMF device. CN101561322A1 relates to dispersion strengthening Pt vs. Pt-13%Rh thermocouple wires and a production method thereof.

### PRIOR ART DOCUMENTS

### Patent Literature

[Patent Literature 1] Japanese Patent Application Laid-open No. 7-270251
[Patent Literature 2] Japanese Patent Application Laid-open No. 8-136357

### SUMMARY OF THE INVENTION

### Problems to be Solved by the Invention

The present invention has been made under the above circumstances, and aims to propose a Pt-PtRh based thermocouple having temperature characteristics equivalent to those of such conventional thermocouples and being free from disconnection of the wire during handling and use.

### Means for Solving the Problems

With respect to the Pt-PtRh based thermocouple, the present inventors have intensively studied a technique for improving the strength of its wire. Then, contrary to expectations, when a Pt in which an oxide was finely dispersed was used as a Pt wire, it was found that strength of the Pt wire could be improved while temperature characteristic of Pt was maintained, which resulted in thinking of the present invention.

The present invention is according to claim 1.

In order to increase strength of high purity Pt, alloying with another metal is generally carried out. However, in view of metallurgy, it is known that incorporation of another metal element into high purity Pt decreases a thermal electromotive force value (cf. Non Patent Literature 1). Therefore, the incorporation of another metal has not been examined at all from the viewpoint of strengthening a thermocouple wire. According to the studies of the present inventors, however, it has been revealed that when an oxide of another metal instead of the elemental metal is finely dispersed in high purity Pt, strength improvement only occurs while a thermal electromotive force value hardly decreases. Further, although an oxide is dispersed on the side of the Pt wire in the Pt-PtRh based thermocouple of the present invention, adjustment of Rh concentration is not necessary for a Pt-Rh alloy wire of the positive electrode (+). Thus, the Pt vs. Pt-Rh based thermocouple of the present invention can realize a thermal electromotive force with the level of class 1 (Class 1).

(Non Patent Literature 1) John Cochrane, "Relationship of chemical composition to the electrical properties of platinum" Temperature Its Measurement and Control in Science and Industry, Vol. 4 (1972) pp. 1619-1632

The Pt wire of the Pt-PtRh based thermocouple according to the present invention has the same level of temperature coefficient (TCR) as in case of only Pt, and provides high creep strength. Therefore, disconnection of the Pt wire hardly occurs, and thus temperature characteristics equivalent to a conventional Pt-PtRh based thermocouple can be realized.

In the Pt-PtRh based thermocouple according to the present invention, a Zr oxide in an amount of 0.02 to 0.5 mass% in terms of Zr is dispersed in the Pt wire. Such a Pt wire results in that temperature coefficient (TCR) at 0°C to 100°C is 3919 ppm/°C to 3925 ppm/°C and that creep strength is breaking strength of 100 hours or more within the range of 10 MPa to 20 MPa at 1400°C. When the Zr oxide is less than 0.02 mass% in terms of Zr, improvement in high temperature creep strength is insufficient.
When it exceeds 0.5 mass%, plastic workability deteriorates and thus wire drawing to make a shape used as a thermocouple becomes difficult.

The Pt wire of the Pt-PtRh based thermocouple according to the present invention can be obtained in the following manner. It is important to provide Pt with a purity of 5N or higher as a starting material and to prevent incorporation of impurities other than a finely dispersed oxide. Specifically, a Pt material with 5N is high frequency melted, cast and then forged and drawn to linear Pt. The linear Pt is atomized into water with a flame gun, an arc gun or the like to prepare Pt powder. The Pt powder is put into a zirconia pot, and zirconia balls as a media and purified water are also put into the pot. Then, stirring process is performed with an attritor having an agitator made of strengthened platinum. Thereafter, the Pt powder and the zirconia balls are separated from each other. After the separated Pt powder is subjected to high temperature sintering process in an inert atmosphere, the sintered body is hot forged and wire drawn to prepare a Pt wire having a predetermined shape. Thereby, the Pt wire of the Pt-PtRh based thermocouple according to the present invention can be obtained.

### Effect of the Invention

According to the present invention, there can be obtained a Pt-PtRh based thermocouple having temperature characteristic equivalent to conventional ones and being free from disconnection of its Pt wire during handling or use.

### BRIEF DESCRIPTION OF THE DRAWINGS

Fig. 1 is a graph showing results of the creep test.
Fig. 2 is a graph showing results of the measurement of thermal electromotive force.
Fig. 3 is a graph showing results of the measurement of long-term stability of the thermocouple.

### DETAILED DESCRIPTION OF THE PREFERRED EMBODIMENTS

Hereinafter, an embodiment of the present invention will be described. In this embodiment, fabrication of an R thermocouple (Pt vs. Pt-13%Rh alloy) is explained.

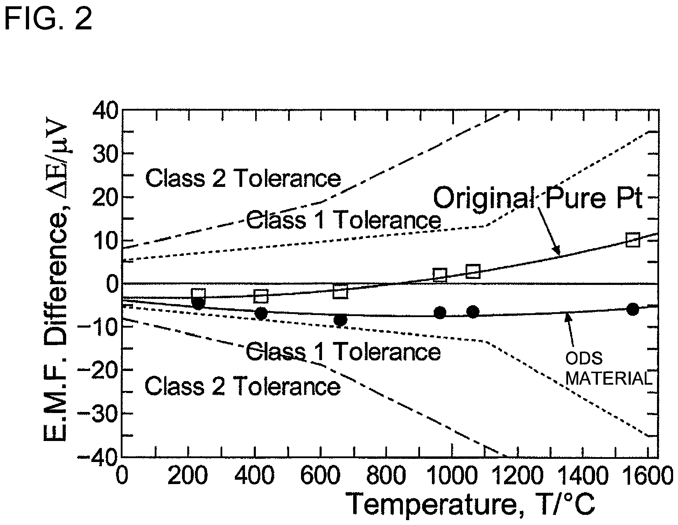

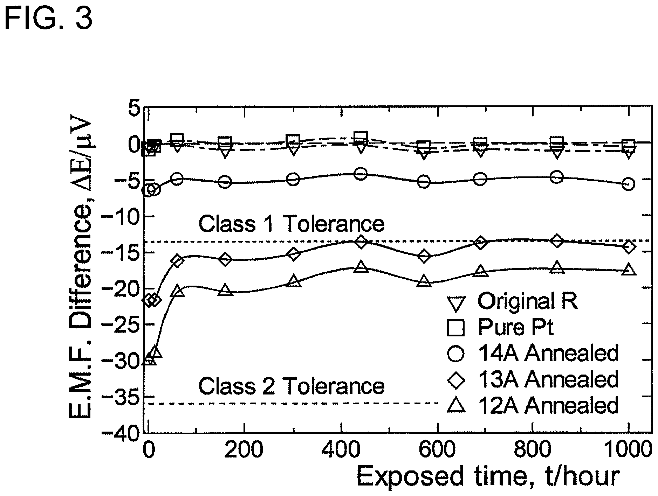

A Pt wire of the thermocouple in this embodiment was prepared in the following manner. First, a sponge-like high purity Pt material (purity 5N: 99.999% Pt) was put into an alumina crucible and subjected to highfrequency melting in an air atmosphere. Then, the melt was cast into a water-cooled copper mold, and the resulting ingot was hot forged to a rod shape. The rod-shaped forging was wire drawn with a grooved roll to prepare a Pt wire with ϕ 1.37 mm. In addition, some were drawn up to ϕ 0.5 mm and used as a material for a comparative control. The characteristics of this Pt wire are shown as Original Pure Pt in Fig. 2 described later and Pure Pt in Table 1 and Fig. 3. Pt-13%Rh of the + side was prepared for usual commercial application (wire that meets the specifications of JIS C 1602 ⁻¹⁹⁹⁵), and the same alloy is used for all the opposite legs in examples of the electromotive force measurement shown here.

Next, with use of the Pt wire with ϕ 1.37 mm and a flame gun, atomization into water was performed to prepare Pt powder. Then, 4000 g of the Pt powder was put into a zirconia pot with 5 L capacity, and 7 kg of zirconia balls with ϕ 5 mm and 1.2 L of purified water were further put into the zirconia pot. Then, stirring process was performed with an agitator made of strengthened platinum (both of the shaft and blade of its stirring bar are made of strengthened platinum) at a rotation speed of 200 rpm for 8 hours. Thereafter, the Pt powder and the zirconia balls were separated and dried. The Pt powder after the stirring process was weighed to afford 4004 g.

Subsequently, 4004 g of the Pt powder was put into a quadratic prism carbon box container (volume 40 mm x 40 mm x 140 mm), and was subjected to a sintering process with a high temperature vacuum furnace in an Ar atmosphere at 1300°C for 3 hours. The resulting sintered body was hot forged to a rod shape, and the rod-shaped forging was subjected to wire drawing process with a grooved roll to prepare a Pt wire with ϕ 0.5 mm. Thereafter, the Pt wire with ϕ 0.5 mm was subjected to current annealing (corresponding to annealing at a temperature of 1700°C or more) at 14 A for 3 hours to prepare a Pt wire (in which a zirconium oxide is dispersed) of the thermocouple.

With respect to the prepared Pt wire (hereinafter referred to as an ODS material) in which a zirconium oxide is dispersed, when resistance temperature coefficient that is an index of its purity was measured, the sponge-like high purity Pt material before the stirring process had 3922 ppm/°C while the prepared ODS material had 3919 ppm/°C to 3925 ppm/°C in a temperature range of 0 to 100°C, and thereby it was found that both materials were substantially equivalent in the temperature characteristics.

The value of W (Ga), to determine propriety of the conditions for a standard platinum resistance thermometer of the International Temperature Scale of 1990, was 1.11800 to 1.11809 for the original high purity Pt wire while the value of the ODS material was 1.11780 to 1.11802. Therefore, although a slight decrease was recognized, it was confirmed that the purity was also electrically sufficient.

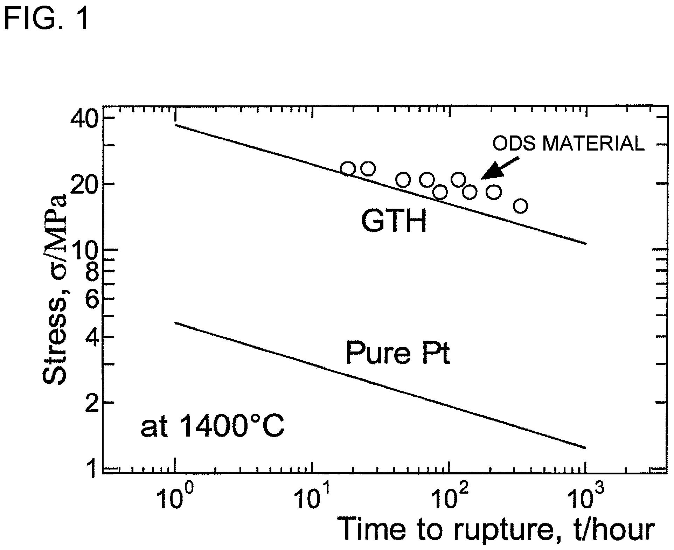

Creep test results of the prepared ODS material are shown in Fig. 1. The Fig. shows a relationship between initial stress and rupture time at 1400°C for the ODS material. The straight line shows a measurement of a conventional oxide-dispersion-strengthened Pt (trade name GTH: Tanaka Kikinzoku Kogyo K. K.) as a comparative control (cf. K. Maruyama, H. Yamasaki, T. Hamada, Materials Science and Engineering A 510-511(2009) p.p. 312-316, High-temperature creep of GTH). The results of the measurement herein are shown as circles (O). It was confirmed that the prepared ODS material has strength equivalent to or higher than that of the conventional oxide-dispersion-strengthened Pt (GTH).

The prepared ODS material and a Pt-13%Rh alloy wire (positive electrode (+)) that was generally used as a standard were set in an insulating tube and joined together to fabricate an R thermocouple.

Table 1 shows the results of thermal electromotive force measurements for the prepared ODS material. In the measurements of thermal electromotive force, after the ODS material ϕ 0.5 mm x 3 m) was annealed by heating current of 14 A (132 V) (corresponding to a temperature of about 1710°C) for 3 hours, a thermocouple was fabricated in combination with Pt-13%Rh, and then thermal electromotive force was measured at each temperature fixed point of Sn, Zn, Al, Ag, Au and Pd. In Fig. 2, the results of Table 1 were represented on the graph. The horizontal axis is measured temperature, and deviation from the JIS (IEC) standards is plotted on the vertical axis. Original Pure Pt in Fig. 2 is a comparative control material taken in the course of the process of preparing this ODS material and prepared with the same process as that used for a usual commercial thermocouple. Further, the Pt-13%Rh of the opposite leg is measured with the same wire.

As is seen from Fig. 2, this ODS material has slightly weaker thermal electromotive force compared to the original high purity Pt, but all values are within the standard of Class 1 in the JIS (IEC) standards, which results in no practical problems.

**[Table 1]**

| Fixed Point | Class 1 Upper Limit | Class 1 Criteria | Class 1 Lower Limit | ODS Material | Pure Pt |
|---|---|---|---|---|---|
| Sn | 1765 | 1756 | 1747 | 1751.62 | 1753.52 |
| Zn | 3621 | 3611 | 3601 | 3604.27 | 3608.26 |
| Al | 6289 | 6277 | 6265 | 6268.57 | 6275.12 |
| Ag | 10016 | 10003 | 9990 | 9996.55 | 10005.25 |
| Au | 11378 | 11364 | 11350 | 11357.07 | 11366.41 |
| Pd | 18263 | 18208 | 18154 | 18196.0 | 18212.00 |
| | | | | | (*µ* V) |

Fig. 3 shows results of measuring long-term stability of the thermocouple in which the ODS material is used as a Pt wire of the Pt vs. Pt-Rh alloy thermocouple. The samples were exposed to a temperature of 1400°C, and values at the Au fixed point were measured at regular interval. The horizontal axis represents exposure time, and the vertical axis represents deviation from values of the JIS (IEC) standards at the Au fixed point. The measurement was performed while the measurement conditions were changed as follows: conductive current at 14 A (corresponding to about 1710°C), 13 A (corresponding to about 1560°C) and 12 A (corresponding to 1420°C). In addition, Fig. 3 also shows results of a usual thermocouple with high purity Pt as a comparative control.

As is seen from Fig. 3, when the annealing temperature is low, a slight increase is found initially and thereafter the values stabilize. Such a drift as to be a practical problem was not observed, and all measurement values are included within the range of Class 2 required for industrial use, and therefore it was confirmed that use in a sufficiently stable state was possible. As described above, Pure Pt in Fig. 3 is one taken in the course of the preparation of the original high purity Pt for preparing the ODS material. Original R shows results of a usual R thermocouple made commercially, and there are shown results of the measurement in which this wire was all used on the Pt-13%Rh side as the + leg.

Subsequently, there will be described results of comparison between the thermocouple according to the present invention and a conventional thermocouple about difference in durability when they are used for temperature measurement at a high temperature.

A thermocouple fabricated in the following way was used as the thermocouple of the present invention: the ODS material (ϕ 0.5 mm × 3 m) was annealed with heating current at a current of 14 A (132 V) (corresponding to a temperature of about 1710°C) for 3 hours, a thermocouple was fabricated in combination with Pt-13%Rh. A Pt wire containing no oxide as a Pt wire was used as a conventional product. The same lot of a normal product of Pt-13%Rh was used for both thermocouples.

The durability was measured with 13 pieces of the thermocouples of the present invention and 13 pieces of the conventional thermocouples being set up in a clear tank of a glass production line. As a result of the measurement at 1550°C, 3 of 13 pieces of the conventional thermocouples had disconnection of their Pt wires at the time of 3 month use and became unusable. In contrast, the disconnection did not occur in the thermocouple of the present invention, and it was thus found that continuous use without any problems was possible.

### Industrial Applicability

In the present invention, a thermocouple can be obtained at such a level that disconnection hardly occurs during use at high temperature or substantially never occurs with use of oxide-dispersed Pt as a Pt wire of an R thermocouple and an S thermocouple having one leg of pure Pt. Therefore, stable measurement is available at high temperature for a long time.

## Claims

1. A Pt-PtRh based thermocouple of Pt vs. Pt-Rh alloy, **characterized in that** a Pt wire is formed from Pt with a purity of 5N or higher; and
a Zr oxide in an amount of 0.02 to 0.5 mass% in terms of Zr is dispersed in the Pt wire, such that the Pt wire consists of the Pt and the Zr oxide.

## Patentansprüche

1. Pt-PtRh-basierendes Thermoelement von Pt gegen eine Pt-Rh-Legierung, **dadurch gekennzeichnet, dass**
ein Pt-Draht aus Pt mit einer Reinheit von 5N oder höher gebildet wird;
und ein Zr-Oxid in einer Menge von 0,02 bis 0,5 Gew.-%, bezogen auf Zr, in dem Pt-Draht dispergiert wird, sodass der Pt-Draht aus Pt und dem Zr-Oxid besteht.

## Revendications

1. Thermocouple à base de Pt-PtRh constituée de Pt versus alliage de Pt-Rh, **caractérisée en ce que**
un fil de Pt est formé de Pt avec une pureté de 5 N ou plus ; et
un oxyde en une quantité de 0,02 à 0,5 % en masse en termes de Zr est dispersé dans le fil de Pt,
**que** le fil Pt se compose du Pt et de l'oxyde.
